**Europäisches Patentamt**

**European Patent Office**

**Office européen des brevets**

(11) Veröffentlichungsnummer: **0 319 654 B1**

## EUROPÄISCHE PATENTSCHRIFT

(45) Veröffentlichungstag der Patentschrift: **30.11.94**

(51) Int. Cl.5: **G01C 11/02**

(21) Anmeldenummer: **88114171.7**

(22) Anmeldetag: **31.08.88**

(54) **Verfahren und Vorrichtung zum Abtasten einer Geländeoberfläche.**

(30) Priorität: **10.12.87 DE 3741863**

(43) Veröffentlichungstag der Anmeldung:
**14.06.89 Patentblatt 89/24**

(45) Bekanntmachung des Hinweises auf die
Patenterteilung:
**30.11.94 Patentblatt 94/48**

(84) Benannte Vertragsstaaten:
**CH DE FR GB LI**

(56) Entgegenhaltungen:
**EP-A- 0 111 429**
**DE-A- 1 798 311**
**FR-A- 2 356 124**
**US-A- 2 931 857**

**NAVY TECHNICAL DISCLOSURE BULLETIN,**
**Band 9, Nr. 2, Dezember 1983, Seiten 43-51,**
**Washington, US; B.M. HEYDLAUFF et al.:**
**"Cross-track correction circuit"**

(73) Patentinhaber: **Deutsche Aerospace AG**

**D-81663 München (DE)**

(72) Erfinder: **Hofmann, Otto, Dr.**
**Lerchenstrasse 4**
**D-8011 Kirchstockach (DE)**

**Beschreibung**

Die Erfindung betrifft ein Verfahren und eine Vorrichtung zum Abtasten einer Geländeoberfläche und/oder anderer Objekte quer zur Flug- bzw. Bewegungsrichtung eines Flugzeuges oder Flugkörpers mit einem Abtaster, der mehrere, in einer Reihe quer zur Abtastrichtung angeordnete, gleich große Einzeldetektoren enthält. Die Einzeldetektoren, die in der Bildebene eines optischen Objektsystemes angeordnet sind, tasten mit Hilfe eines vor dem Objektiv angeordneten optischen Abtastelementes, etwa eines Drehspiegels, das Gelände bzw. die Objekte quer zur Flugrichtung zeilenweise ab. Durch die Vorwärtsbewegung des den Abtaster tragenden Flugzeuges bzw. Flugkörpers reiht sich quer zur Flugrichtung Zeile an Zeile, so daß daraus ein vollständiges Bild der Geländeoberfläche erzeugt werden kann. Als Beispiel sei die DE-A-1798311 erwähnt.

In diesem Dokument ist auch das Problem erkannt, daß zur Erzielung einer kontinuierlichen Abtastung ohne Überschneidung und ohne Auslassung von Geländestreifen die Rotationsgeschwindigkeit des Abtastsystems dem momentanen Verhältnis der Fluggeschwindigkeit und der Flughöhe angepaßt werden muß. Nicht erwähnt ist jedoch in diesem Dokument, daß insbesondere beim Tiefflug bzw. großen Bildwinkeln entlang einer Abtastlinie die Entfernung vom Abtaster zur Geländeoberfläche bzw. zum Objekt sich stark verändert und infolgedessen auch die von den Einzeldetektoren erfaßten Objektpunktgröße, sofern die Brennweite konstant bleibt. Es entstehen dadurch die bekannten Überdeckungen mit wachsendem Bildwinkel, da die von einem Detektor abgetasteten Geländestreifen mit wachsendem Bildwinkel immer breiter werden.

In der nicht vorveröffentlichten Patentanmeldung P 37 31 845.4 mit dem Titel "Digitale Abtastung mit entfernungsunabhängiger geometrischer Auflösung" ist nun ein Verfahren beschrieben, mit dem unabhängig von der Objektentfernung und unabhängig vom Abtastwinkel ein regelmäßiges Pixelraster aus gleich großen Standardpixeln erzeugt wird, dessen einzelne Zeilen und Spalten lückenlos aneinander schließen und überdeckungsfrei sind. Im Prinzip wird dieses regelmäßige Standard-Pixelraster durch einen Resampling-Prozeß gewonnen, indem aus den Ausgangssignalen der Einzeldetektoren, d.h. dem unmittelbar gemessenen Elementarpixelraster, jeweils eine solche Anzahl von Elementarpixeln zusammengefaßt werden, daß diese gerade ein Standardpixel ergeben.

Um stets gleich große Standardpixel und ein lückenloses und überdeckungsfreies Pixelraster zu erhalten, muß dieser Resampling-Prozeß in Abhängigkeit von der Flughöhe verändert werden, und außerdem muß die Abtastgeschwindigkeit und demzufolge auch die Pixelfrequenz des Detektors, das ist die zeitliche Sequenz der einzelnen Detektorsignale, in Abhängigkeit der Fluggeschwindigkeit v verändert werden. Diese Veränderungen bringen Nachteile mit sich, da die Programmsteuerung des Resampling-Prozesses variabel und aufgrund der vielen Parameter wesentlich aufwendiger gestaltet werden muß. Die Änderung der Detektor-Pixelfrequenz muß durch eine entsprechende Bandbreite der Detektor-Elektronik aufgefangen werden.

Ein weiterer Gesichtspunkt ist zu bedenken. Die sehr unterschiedlichen Abtastentfernungen bei niedrigen Flughöhen (z.B. $E_{max}$ = 2500 m, $E_{min}$ = h = 50 M) erfordern bei dem gewählten Verfahren, daß zur Bildung eines Standard-Pixels B bei $E_{min}$ 0 h relativ viele Detektorpixel k = $E_{max}$ / $E_{min}$ benötigt werden. Daraus folgt, daß für einen Abtaststreifen mit n Zeilen der Sensor entsprechend viele, d.h. M = k . n Einzeldetektoren enthalten muß. Dies führt unter gewissen Umständen zu Detektorzahlen, die nicht verfügbar sind.

Der Erfindung liegt die Aufgabe zugrunde, den beschriebenen Resampling-Prozeß dahingehend zu erweitern und zu verbessern, daß unabhängig von Flughöhe und Fluggeschwindigkeit eine einfache Möglichkeit gegeben wird, ein regelmäßiges, lückenloses und überdeckungsfreies Pixelraster zu erzeugen.

Diese Aufgabe ist für ein Verfahren bzw. eine Vorrichtung durch die Merkmale des Patentanspruches 1 bzw. 2 gelöst.

Demgemäß liegt der wesentliche Gedanke der Erfindung darin, daß die Systembrennweite F und die Drehzahl U des Abtasters in Abhängigkeit von der Flughöhe h und der Fluggeschwindigkeit v nach den angegebenen Formeln gesteuert wird. Die Flughöhe h und die Fluggeschwindigkeit v können mit Hilfe eines herkömmlichen Höhenmessers bzw. eines Geschwindigkeitsmessers bestimmt werden.

Der Vorteil des angegebenen Verfahrens liegt darin, daß durch eine derartige Steuerung der Resampling-Prozeß und insbesondere dessen Programmsteuerung mit der Vielzahl von Parametern nicht geändert werden muß. Vielmehr wird bei einer korrekten Einstellung und Steuerung des Abtasters unabhängig von der Höhe und Fluggeschwindigkeit stets ein lückenloses und überdeckungsfreies Pixelraster erhalten.

Die Erfindung ist in einem Ausführungsbeispiel anhand der Zeichnung näher erläutert. In dieser stellen dar:

Fig. 1     ein zweigliedriges optisches System mit variabler Systembrennweite für eine Vorrichtung zum Abtasten einer Geländeoberfläche gemäß der Erfindung;

Fig. 2    ein Blockschaltbild einer Vorrichung gemäß der Erfindung zum Abtasten einer Geländeoberfläche.

Es wird dabei ein Abtaster angenommen. der eine oder mehrere rotierende Reflexionsflächen enthält und dessen Drehachse in Flugrichtung (rechtwinklig zur Abtastrichtung) und dessen optische Achse(n) in der Abtastebene (d.h. rechtwinklig zur Flugrichtung) liegen.

F [mm] Systembrennweite des Abtasters

M Zahl der Einzeldetektoren des Abtasters

p [mm] Größe der Einzeldetektoren

t [s] Belichtungs-Intervall bzw. Integrationszeit der Detektoren

$f_p = \frac{1}{t}$ [1/s] Pixelfrequenz

E [m] Objektentfernung

U [1/s] Umdrehungszahl des Abtasters

r Zahl der Reflexionsflächen des Abtasters ( = Zahl der Abtastungen für eine Umdrehung des Abtasters)

v [m/s] Fluggeschwindigkeit

h [m] Flughöhe

$B = B_x$ [m] Standard-Objektpixelgröße

n Zahl der parallelen Abtastzeilen der Breite B einer Abtastung

$E_{max}$ [m] Maximalentfernung

$E_{min}$ [m] Minimalentfernung

Es ergeben sich folgende Beziehungen:

Bildgeschwindigkeit in der Bildebene $V_B$ [mm/s]

$$V_B = p \cdot f_p = 4 \cdot \pi \cdot F \cdot U$$

$$U = \frac{p \cdot f_p}{4\pi \cdot F} \tag{1}$$

Für eine lückenlose; überdeckungsfreie Abtastung muß die Bedingung erfüllt sein:

$$v = B \cdot n \cdot U \cdot r \tag{2}$$

Mit Gl. (1) ergibt sich daraus für die Zahl n der Parallel-Zeilen einer Abtastung:

$$n = \frac{4\pi \cdot F \cdot v}{B \cdot r \cdot p \cdot f_p} \tag{3}$$

Wenn sich v ändert, müssen für eine lückenlose und überdeckungsfreie Abtastung andere Parameter geändert werden. Paßt man durch Veränderung der Pixelfrequenz $f_p$ an, so ergibt sich für $f_p$:

$$f_p = \frac{4 \cdot \pi \cdot F}{B \cdot n \cdot r \cdot p} \cdot v \tag{4}$$

Die Elementar-Objektpixelgröße $D_x$ ist:

$$D_x = \frac{E}{F} \cdot p \tag{5}$$

Zur Bildung der Standard-Objektpixelgröße $B_x = B$ bei der Minimalentfernung $E_{min} = h$ sind.

$$k = \frac{B_x}{D_x} = \frac{B_x \cdot F}{h \cdot p} \qquad (6)$$

Pixel erforderlich.

Die maximal erforderliche Detektorzahl ist daher

$$M = n \cdot k \qquad (7)$$

Es gilt weiterhin

$$B_x = B = \frac{E_{max} \cdot p}{F} \qquad (8)$$

somit ergibt sich durch Einsetzen von (6) und (8) in (7) die Bedingung:

$$M = n \cdot \frac{E_{max}}{h} \qquad (9)$$

$$k = \frac{E_{max}}{h} = \frac{M}{n} \qquad (10)$$

Fordert man, daß für sämtliche Flughöhen h der Faktor k konstant bleiben soll, dann kann ein konstanter Resampling-Prozeß programmiert werden. Dieser ist nur noch vom Abtastwinkel $\omega$ (Winkel zwischen Lotlinie und momentaner Abtastrichtung siehe Abb.3 der Hauptanmeldung) abhängig.

Stellt man weiterhin die Bedingung, daß die Pixelfrequenz $f_p$ = konstant bleiben soll, dann ergeben sich notwendigerweise die Systemparameter

F, U, B,

als Funktionen der Variablen h und v.

Mit den Abkürzungen

$$A = \sqrt{k \cdot r \cdot n} \qquad (11)$$

4

$$C = \sqrt{\frac{f_p}{4\pi}} \qquad (12)$$

$$K_F = p \cdot A \cdot C$$

$$K_U = \frac{C}{A}$$

$$K_B = \frac{k}{A \cdot C}$$

ergeben sich folgende System-Parameter:

$$F = K_F \sqrt{\frac{h}{v}} \qquad (13)$$

$$U = K_U \sqrt{\frac{v}{h}} \qquad (14)$$

$$B = K_B \sqrt{h \cdot v} \qquad (15)$$

Die Pixelzahl einer Abtastung ergibt sich aus

$$P = n \cdot K_I \sqrt{\frac{h}{v}} \qquad (16)$$

wobei die Konstante $K_I$ vor allem vom Elementar-Auflösungswinkel $\Delta\omega$ und vom Bildwinkel abhängt.

Die Zahl der Abtastungen pro Sekunde ist $U \cdot r$, mit (14) ergibt sich daher der Datenfluß I pro Sekunde zu

$$I = U \cdot r \cdot P$$

$$= n \cdot r \cdot K_I \cdot K_U = konstant \qquad (17)$$

Gibt man statt des Faktors

$$k = \frac{E_{max}}{h}$$

die Maximalentfernung $E_{max}$ und die Standardpixelgröße B vor, so errechnet sich die Zeilenzahl n aus

$$n = \frac{4\pi \cdot v \cdot E_{max}}{B^2 \cdot r \cdot f_p} \qquad (17)$$

k ergibt sich dann aus (10)

Den Formeln (13) bis (16) entnimmt man, daß die Parameter F, U und I nur noch Funktionen der konstanten Parameter k , r, n, $f_p$ und $K_l$ und der Wurzel aus dem v/h-Verhältnis bzw. ihrem Reziprokwert proportional sind. Die Standardpixelgröße B ändert sich demgegenüber mit $\sqrt{h} \cdot v$, sie verkleinert sich bei niedriger Flughöhe h und Geschwindigkeit v, allerdings nicht linear sondern mit der Wurzel aus dem Produkt dieser Parameter.

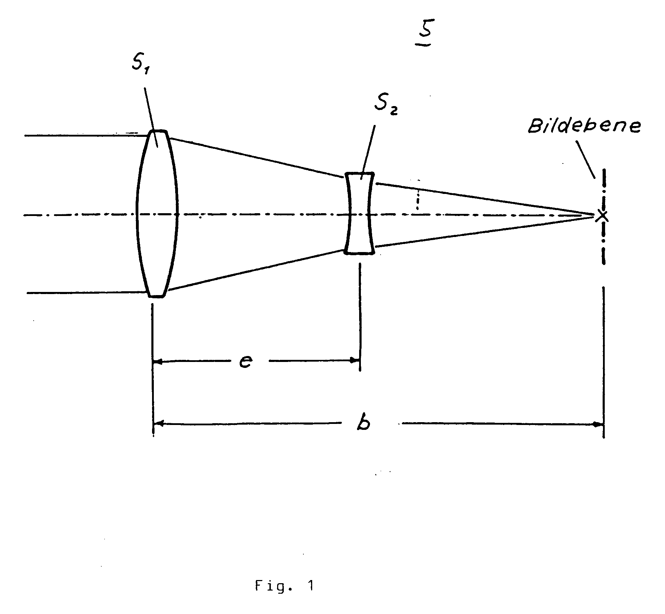

Die variable Systembrennweite F läßt sich in bekannter Weise, z.B. durch ein optisches System 5 mit mehreren Gliedern $S_1$ und $S_2$ darstellen (Fig.1)

$$F = \frac{f_1 \cdot f_2}{f_1 + f_2 - e} \qquad (18)$$

In Gl. (18) sind $f_1$ und $f_2$ die Brennweiten der Einzelglieder $S_1$, $S_2$ und e ihr Abstand, der z.B. durch ein Mikroprozessor-gesteuertes Servosystem gemäß Gl. (13) der jeweiligen Flughöhe h und Geschwindigkeit v gesteuert werden kann:

$$e = (f_1 + f_2) - \frac{f_1 f_2}{K_F} \sqrt{\frac{v}{h}} \qquad (19)$$

Entsprechend wird auch der Abstand b zwischen Bildebene und Hauptlinse bzw. Hauptspiegel $S_1$ gesteuert:

$$b = F - \frac{e \cdot f_2}{f_1 + f_2 - e} = f_1 \left(1 - \frac{K_F}{f_2} \sqrt{\frac{h}{v}}\right) \qquad (20)$$

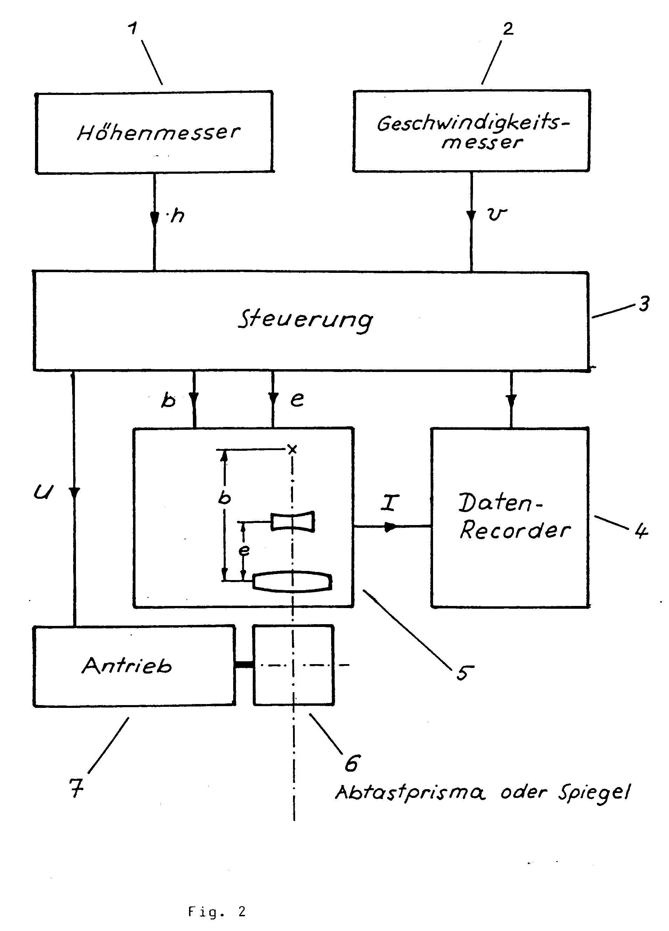

In Figur 2 ist in einem Blockschaltbild das Gesamtsystem dargestellt.

Ein Flughöhenmesser 1 und ein Flug-Geschwindigkeitsmesser 2 liefern ständig ihre Signale an eine Steuerung 3, die gemäß der Gleichungen (13) die Systembrennweite F bzw. die Abstände e (Gl. (19) und b-(20) des optischen Systems 5 und gemäß Gl. (14) die Drehzahl U eines Antriebsystems 7 für ein optisches Abtastelement 6 steuern.

Der Bilddatenfluß I von einer Kamera 5 zu einem Aufzeichnungssystem 4 wird gemäß der Gl. (16) geregelt.

Das optische System kann als Linsen- oder Spiegeloptik, z.B. als Cassegrain-Typ ausgeführt sein.

Diese hier dargelegte Lösung bietet folgende Vorteile:

1. Sie erlaubt unabhängig von Flughöhe h und Geschwindigkeit v einen fest programmierbaren Resample-Prozeß.

2. Sie liefert unabhängig von Flughöhe h und Geschwindigkeit v ein geometrisch stets ähnliches, lückenloses und überdeckungsfreies Pixelraster, dessen Absolutgröße $\sqrt{h} \cdot v$ proportional ist.

3. Sie paßt sich automatisch den Gegebenheiten an:

   - Größere Flughöhe vergrößert die Erfassungsbreite $E_{max}$ bei gleichzeitiger Vergrößerung der Standardpixelgröße B.

- Niedrigere Flughöhe vermindert die Erfassungsbreite $E_{max}$ bei gleichzeitiger Verringerung der Standard-Pixelgröße B, was einer Vergrößerung des geometrischen Auflösungsvermögens entspricht.

4. Die Pixelfrequenz $f_p$ und damit die Bandbreite der Detektor-Elektronik kann konstant bleiben.

5. Die Zahl M der benötigten Detektoren kann geringer sein als ein Resamplingprozess ohne Brennweitenveränderung.

**Patentansprüche**

1. Verfahren zum Abtasten einer Geländeoberfläche und/oder anderer Objekte quer zur Flug- bzw. Bewegungsrichtung x eines Abtasters mit einem Abtastelement und mit einer rechtwinklig zur Abtastrichtung y angeordneten Detektorreihe, die mehrere (M) gleich große Einzeldetektoren enthält, wobei bei der Abtastung bis zu einer Maximalentfernung $E_{max}$ aus den Detektorsignalen das Bild der Oberfläche und/oder der Objekte zusammengesetzt wird, dadurch gekennzeichnet, daß aus den Detektorsignalen durch einen Resampling-Prozeß in der Bildebene Standard-Objektpixel etwa der gleichen Größe abgeleitet werden, denen auf Seiten des Objektes Flächen entsprechen, deren Projektion in Richtung des Abtaststrahles in eine Ebene senkrecht zu dem Abtaststrahl Standard-Objektflächen B etwa gleicher Größe ergeben, und bei jeder Abtastung ein lückenloses und überdeckungsfreies regelmäßiges Raster mit n Zeilen gebildet wird, daß ferner

a) ein konstantes Verhältnis

$$k = \frac{\text{Maximal-Entfernung } E_{max}}{\text{Flughöhe } h}$$

eingehalten wird,

b) die Systembrennweite F des Abtasters als Funktion des Ausdrucks

$$F = K_F \sqrt{\frac{\text{Flughöhe } h}{\text{Fluggeschwindigkeit } V}}$$

gesteuert wird,

c) die Drehzahl U des Abtast-Elements als Funktion des Ausdrucks

$$U = K_U \sqrt{\frac{\text{Fluggeschwindigkeit } V}{\text{Flughöhe } h}}$$

gesteuert wird, wobei

d) der Datenfluß I

$$I = n.r.K_I.K_U = \text{konstant}$$

ist und

e) die Größe B als Funktion des Ausdruckes

$$B = K_B \sqrt{h \cdot v}$$

variiert, wobei die Faktoren $K_F$, $K_U$, $K_B$ Funktionen der konstanten Systemparamter

$$k = \frac{\text{Maximal-Entfernung } E_{max}}{\text{Flughöhe } h}$$

r = Zahl der Reflexionsflächen des optischen Abtast-Elements bzw. Zahl der Abtastungen pro Umdrehung des Abtast-Elements

n = Zeilenzahl einer Abtastung

$f_p$ = Pixelfrequenz des Abtasters

darstellen und $K_I$ eine Funktion des Elementar-Auflösungswinkels und des Bildwinkels ist.

2. Vorrichtung zur Durchführung des Verfahrens nach Anspruch 1, mit einem Abtaster (5, 6, 7) aus einem rotierenden Abtastelement (7), einem optischen System (5) und einer in der Brennebene des optischen Systems (5) rechtwinklig zur Fluggeschwindigkeit angeordneten Detektorzeile aus mehreren gleich großen Einzeldetektoren sowie mit einer Rechenschaltung (4), um aus den Detektorsignalen der Einzeldetektoren durch einen Resampling-Prozeß ein regelmäßiges Pixelraster zu erzeugen, das gleich große Standard-Pixel aufweist sowie lückenlos und überdeckungsfrei ist, dadurch gekennzeichnet, daß der Abtaster (5, 6, 7) ein mehrgliedriges optisches System mit einer Systembrennweite F aus einem Hauptglied ($S_1$) mit einer ersten Einzelbrennweite ($f_1$) und einem zweiten Glied ($S_2$) mit einer zweiten Einzelbrennweite ($f_2$) aufweist, und daß eine Steuerung (3) vorgesehen ist, mit der der Abstand e zwischen den optischen Gliedern ($S_1$, $S_2$) nach der Funktion

$$e = (f_1 + f_2) - \frac{f_1 f_2}{K_F} \cdot \sqrt{\frac{v}{n}}$$

der Abstand b zwischen dem Hauptglied $S_1$ und der Bildebene gemäß der Funktion

$$b = f_1 \left(1 - \frac{K_F}{f_2} \sqrt{\frac{h}{v}}\right)$$

und die Umdrehungsgeschwindigkeit U des Abtastelementes (6) nach der Funktion

$$U = K_U \sqrt{v/h}$$

gesteuert werden, wobei $K_F$ eine Konstante ist und zum Messen der Fluggeschwindigkeit v und der Flughöhe h ein Geschwindigkeitsmesser (2) bzw. ein Höhenmesser (1) vorgesehen sind.

## Claims

1. Method of scanning a terrain surface and/or other objects transversely to the flight- or movement direction x of a scanner by means of a scanning element and a detector series arranged rectangularly to the scanning direction y with a plurality (M) of individual detectors of equal size, and that the image of the surface and/or the objects is assembled from the detector signals during scanning up to a maximum range $E_{max}$, **characterised in that** by means of a resampling process in the image plane standard object pixels of approximately equal size are retrieved from the detector signals which correspond at the side of the object with surfaces the projection of which in the direction of the scanning beam in a plane vertical to the scanning beam offer standard object surfaces B of approximately equal size, and that each scan produces an uninterrupted and non-overlapping regular raster with n lines, and that furthermore

a) a constant ratio of

$$k = \frac{\text{maximum range } E_{max}}{\text{flight altitude} \quad h}$$

is maintained,
b) the system focal width F of the scanner is controlled as a function of the expression

$$F = K_F \sqrt{\frac{\text{flight altitude } h}{\text{flight speed} \quad V}}$$

c) the torque U of the scanning element is controlled as a function of the expression

$$U = K_U \sqrt{\frac{\text{flight speed } V}{\text{flight altitude } h}}$$

and that
d) the data flow I is

$$I = n \times r \times K_I \times K_U = \text{constant}$$

and
e) size B varies as a function of the expression

$$B = K_B \sqrt{h \times v}$$

and factors $K_F$, $K_U$, $K_B$ represent functions of the constant system parameter

$$k = \frac{\text{maximum range } E_{max}}{\text{flight altitude} \quad h}$$

r = the number of reflexion surfaces of the optical scanning element or the number of scans per rotation of the scanning element,
n = number of lines of one scan,
$f_p$ = pixel frequency of the scanner,
and $K_I$ is a function of the elementary resolution angle and of the image angle.

2. Device for carrying out the process according to claim 1, by means of a scanner (5, 6, 7) comprising a rotating scanner element (7), an optical system (5) and a detector line, which is arranged in the focal plane of the optical system (5) rectangularly to the flight speed and comprising a plurality of individual detectors of equal size as well as a computer circuit (4), for producing, by way of a resampling process, from the detector signals of the individual detectors a regular pixel raster of equally sized standard pixels without interruption and free of overlaps, **characterised in that** the scanner (5, 6, 7) comprises a multi-sectional optical system with a system focal width F of a main element ($S_1$) with a first individual focal width ($f_1$) and a second element ($S_2$) with a second individual focal width ($f_2$), and that a control (3) is provided, by means of which the distance e between the optical elements ($S_1$, $S_2$) is controlled according to the function

$$e = (f_1 + f_2) - \frac{f_1 f_2}{K_F} \sqrt{\frac{v}{n}}$$

the distance b between the main element $S_1$ and the image plane is controlled according to the function

$$b = f_1 \left(1 - \frac{K_F}{f_2} \sqrt{\frac{h}{v}}\right)$$

and the rotational speed U of the scanning element (6) is controlled according to the function

$$U = K_U \sqrt{v/h}$$

in which respect $K_F$ is a constant, and an airspeed indicator (2) or an altimeter (1) is provided for measuring the airspeed and flight altitude.

**Revendications**

1. Procédé de palpage de la surface d'un terrain et/ou d'objets autres transversalement à la direction de vol ou de déplacement "x" d'un dispositif de palpage comportant un élément de palpage et une rangée de capteurs qui est disposée à angle droit par rapport à la direction de palpage "y" et comporte plusieurs (M) détecteurs individuels de même dimension, l'image de la surface et/ou des objets étant formée à partir des signaux des détecteurs lors du palpage jusqu'à une distance maximale $E_{max}$, caractérisé par le fait que par un procédé de ré-échantillonnage, dans le plan de l'image, on forme à partir des signaux des détecteurs des pixels d'objets standard sensiblement de même dimension auxquels correspondent côté objet des surfaces dont la projection dans la direction du rayon de palpage sur un plan normal audit rayon de palpage donne des surfaces "B" d'objet standard sensiblement de même dimension et que pour chaque palpage on forme un réseau régulier, sans trou et sans recouvrement à n lignes, par le fait

a) que l'on respecte un rapport constant

$$k = \frac{\text{distance maximale } E_{max}}{\text{altitude de vol } h},$$

b) que l'on commande la focale F du système de palpage conformément à l'équation

$$F = K_F \sqrt{\frac{\text{altitude de vol } h}{\text{Vitesse de vol } V}},$$

c) que l'on commande la vitesse de rotation U de l'élément de palpage en fonction de l'équation

$$U = K_U \sqrt{\frac{\text{Vitesse de vol } V}{\text{altitude de vol } h}},$$

d) que le flux de données I est constant

$$I = n \cdot r \cdot K_I \cdot K_U ,$$

e) que l'on fait varier la grandeur B en fonction de l'équation

$$B = K_B \sqrt{h \cdot v} ,$$

les facteurs $K_F$, $K_U$, $K_B$ étant des fonctions des paramètres constants du système

$$k = \frac{\text{Distance maximale } E_{max}}{\text{altitude de vol } h} ,$$

r = Nombre des surfaces de réflexion de l'élément optique de palpage ou nombre de palpages par rotation dudit l'élément de palpage
n = Nombre de lignes d'une opération de palpage
$f_p$ = Fréquence de pixel du dispositif de palpage et $K_I$ étant une fonction de l'angle de résolution élémentaire et de l'angle d'image.

2. Dispositif pour la mise en oeuvre du procédé selon la revendication 1, comportant un dispositif de palpage (5, 6, 7) formé d'un élément de palpage (7) rotatif, d'un système optique (5) et d'une rangée de détecteurs constituée de plusieurs détecteurs individuels de même dimension et disposée dans le plan focal du système optique (5) à angle droit par rapport à la direction de vol ainsi qu'un circuit de calcul (4) pour produire par un procédé de ré-échantillonnage, à partir des signaux des détecteurs individuels un réseau régulier de pixels qui présente des pixels standards de même taille et est exempt de trous et de recouvrements, caractérisé par le fait que le dispositif de palpage (5, 6, 7) comporte un système optique à plusieurs éléments avec une focale de système F, formé d'un élément principal ($S_1$) avec une première focale individuelle ($f_1$) et d'un deuxième élément ($S_2$) avec une deuxième focale individuelle ($f_2$) et par le fait qu'il est prévu une commande (3) au moyen de laquelle on commande la distance "e" entre les éléments optiques ($S_1$, $S_2$) conformément à la fonction

$$e = (f_1 + f_2) - \frac{f_1 f_2}{K_F} \sqrt{\frac{v}{n}} ,$$

la distance b entre l'élément principal $S_1$ et le plan d'image conformément à la fonction

$$b = f_1 \left(1 - \frac{K_F}{f_2} \sqrt{\frac{h}{v}}\right) ,$$

et la vitesse de rotation U de l'élément de palpage (6) conformément à la fonction

$$U = K_U \sqrt{\frac{h}{v}} ,$$

$K_F$ étant une contante et un dispositif de mesure de vitesse (2) et un altimètre (1) étant prévus pour mesurer la vitesse de vol v et l'altitude de vol h.

11

Fig. 1

Fig. 2